## Europäisches Patentamt
## European Patent Office
## Office européen des brevets

(11) Publication number: **0 009 507**
**A1**

# (12) EUROPEAN PATENT APPLICATION

(21) Application number: **78100938.6**

(22) Date of filing: **13.09.78**

(51) Int. Cl.³: **A 61 C 13/22**
**A 61 C 11/00**

(43) Date of publication of application:
**16.04.80 Bulletin 80/8**

(84) Designated Contracting States:
**BE DE FR GB NL SE**

(71) Applicant: **Dequeker, Frans Arthuur Benoit**
**P.O. Box 1737**
**Sydney(AU)**

(72) Inventor: **Dequeker, Frans Arthuur Benoit**
**P.O. Box 1737**
**Sydney(AU)**

(74) Representative: **Sommerville, John Henry et al,**
**Sommerville & Rushton 89, St. Peters Street**
**St. Albans Herts. AL1 3EN(GB)**

(54) **A harmless cosmetic removable partial denture construction.**

(57) A removable tissue-born partial denture provided with a harmless/aesthetic/secure and normalised retention- and rest-system constructed according a normalised precise surveying-procedure and provided with a harmless (non-interferring) bite-function realised with a special devised denture-mounting device imitating the jaw-function, said provisions to permit the possibility of the construction of title according various designs in order to restore the complete situation of the partly missing teeth in the natural dentition, said restoration of title is processed in a fracture-resistant structure according a productive, precise-surveyed construction-plan.

In order to prevent the conventional straining and harm-full method of clasping and supporting the living abutment-teeth (causing root-trauma and eruption of teeth) with the object to retain and support the restoration in the technical field of the removable partial denture-construction made of resin or chrome-alloy instead the said restoration of title is devised to be retained securely/harmless and inconspicuous by means of minute preformed resilient retention-anchors [(10x) designed for anterior-abutment teeth, (10) for posterior-abutment teeth] fastened in the surveyed path of insertion (14x-14) of the saddle-part (3) of restoration, said anchors indestructible made of high tensile pre-wrought chrome-nickel wire 0.50 mm. - 0.60 mm. Ø effecting a resi-lient stressless directed hold-contact between the remaining living teeth 7 and 7x, meanwhile the restoration is supported by an aesthetic harmless rest-structure in form of surveyed onlays 5 +6 processed in fracture and wear-resistant clear or tooth-toned resin; said "anchor" retention- and "onlay" rest-structure are covered with a thick-graded medical silicon-oil liniment to protect enamel against the acid-formation and bacterien, the wear of the resin and the anchor-friction.

In case of weak abutment-teeth (7,7x) in the upper partial restorations of title, an alternative of rest-structure in form of a parabolic rim (4 +4x), depth 1mm., width 3mm. is proces-sed uniformly in the inner-surface of the base (2) made of resin or chrome; the said base is designed in various forms to achieve a harmless construction in respect with the remaining living-abutment-teeth and is processed in fracture-resistant gumtoned resin which outer- and innersur-face is protected with a medical graded silicon-oil to resist food-stains and plaque, bacterien, tartre-stone, nicotine and discolouring-agents, said base (2) may be made in chrome, except the saddles (3). The bilateral free-end partial construc-tion (case where all posterior-teeth are missing) is provided with an extra labial bar fixed (18), hinged (22) or partable (22x) for retention and stability in the front.

./...

Fig 3

## - 1 -

## COMPLETE SPECIFICATION

Name of applicant:     FRANS ARTHUUR BENOIT   DEQUEKER

Address of applicant:    P.O.BOX 219/NEWCASTLE/2300/N.S.W.
                              AUSTRALIA

ACTUAL INVENTOR      :  F.Dequeker

Address of Service   :  P.O.BOX 219/NEWCASTLE/ 2300/N.S.W.
                              AUSTRALIA

Complete Specification for the invention entitled:

" A harmless cosmetic removable partial denture construction"

The following statement is a full description of this in-
-vention, including the best method of performing it known to
me filed on page two:

This invention relates to the removable tissue-born simplified and practical partial denture and proper method of make to be retained removably in the various situations of missing teeth(in case of partly missing teeth between the living and remaining teeth aswell in case of the complete missing of the posterior-teeth in dental term "a bilateral free-end partial")in the complete arch of the hu--man natural healthy dentition,there being means carried by said restoration in title for a secure-permanent and harmless support and retention on the remaining living abutment-teeth and tissue aswell means to enhance the aesthetic and maximum hygiene and com--fort by mode of a self-cleaning protection achieved by a Silicon medical graded oil-film and liniment .

The conventional clasp-and rest-structure designed for retention and support in removable chrome or plastic partial dentures are devised according a straining-rigid embracing of living teeth , .said manner causing serious defects effected by the masticatory pulling-forces to the parodontium tearing the rootperiost(membra--ne) and cracking the enamel of the living abutment-teeth prepa--ring for decay and eruption.

It is the main-object of this invention to provide and secure a retentive and supporting capacity for the said restoration of ti--tle in a harmless,cosmetic,hygienic,formstable,fracture-resistant, precise,permanent-retentive and adjustable manner.

An other object of the present invention is the provision of a self-cleaning protection by means oi a medical graded protective silicon oilfilm daily applied by a dispenser on the outersurface of denture and a silicon-oil liniment applied in the innersurfa--ce of denture(patent-applied/Australia/No 1943,5/10/77) thereby enhancing the resistance to foodimpact and plaque aswell the re--sistance to discolouring-agents on the whole restoration teeth included caused by foodstains,nicotine,tartrestone,curry etc.., aswell the resistance to the bacterien and acidformation on the enamel of living teeth.

An other object of the present invention is the provision of a strainfree bitefunction(articulation) in the restoration of title, free from vertical and horizontal levereffects according the last modern articulation theories based on a horizontal-rotational gli--ding or based on a non-interferring gliding of the existing natu--ral abraded unobtrusive tooth-pattern.

Said restoration is surveyed and processed(heatcuring) in fracture--resistant resin according a proper direct tecnic on the mastersto--nemodel without the duplicating procedure.

According the present invention of the title there is provided a special tissue-born base provided with rest-onlays or palatinal basestop(instead of metal-rests) made of fracture-resistant resin, said base is combined with anterior or posterior saddles carrying the denture-teeth,said restoration of title may be in form of a single saddle with 2 or 3 or 4 denture-teeth,said base and sad--dles are designed to achieve a harmless supporting restoration in respect with the remaining living and abutmentteeth,gingiva--margin and parodontium.

Conveniently in one form of the invention,single saddle or various saddles united in a base between the remaining living teeth,in or--der to retain and stabilise the said restoration of title without drift,drop,rock or tilt securely and strainfree between the retai--nerteeth in an inconspicuous and harmless manner,I devise there-

- 4 -

-fore a precise retention-and rest-system comprising different elements as:-Four harmless cosmetic  rests in form of onlays and in design to resist the compressive load(without pulling-force on the supporting living teeth) are used on healthy living abut- -mentteeth and processed in each saddle of the various forms of restoration according title,said rest-onlays made of fracture- -resistant aswell wear-resistant resin   clear;gum-or tooth-to- -ned are devised cosmetic in arrowform on the buccal(side to cheek) and lingual(side to tongue) toothsurface of the abutmentteeth.

-An alternative for the said rest-onlay in form of a base-stop designed in the.denturebase is devised only in up- -per partial restorations in case the living abutmentteeth are too weak for support said basestop is processed in resin to the inside of the baseplate in the form of a half parabole including the postdamming(rear-border of denturebase)with a depth of a 0.5mm- 1mm and 3 mm width.

-The specified supporting-system of above is further combined with a precise surveyed,resiliently strain-free retention- -system made of high-tensile,indestructible preformed wrought chrome-nickel wire 0.65 mm $\emptyset$(for weak teeth 0.5 mm),said retention- -system is devised with 2 minute resilient preformed anchors which are fastened into the path of insertion of each saddle to fit and grasp (not pin-pointing),without pressure and pull,the spheric bell of the side-surface(in dental term approximal toothsurface left or right)of the abutmenttooth by means of a selective and analytical surveying method and plan in order to realise the re- -tentive capacity in a hidden  aesthetical and comfortable mode without foodtrap.Said anchor is preformed in a standard-form and

- 5 -

0009507

and size adaptable in all cases of restorations.

According this manner of above,the saddle-base of the new form of restoration of title is suspended in a stressless contact be--tween 2 or more natural retainer-teeth and follows stressless the motion of the semi-rigid livingteeth by means of the flexi--bility of the anchors,said anchors are shielded against food--impact and covered with a silicon thick-graded viscuous li--niment of medical grade oil to protect the enamel.

Alternatively,I provide in an other form of the invention accor--ding title a lower or upper partial related to the bilateral free-end type(case  where all the posterior-teeth are missing).

Same elements are used as above and an extra labial bar desig--ned for stability and support in the frontpart of the jaw is joi--ned to the posterior-saddles.

The said forms of restoration of invention according title may be provided with a chrome nickel base instead of a resin-base in a case of combined saddles;Instead of the duplicating-pro--cedure the withdrawn-tecnic by means of a resin texturised-wax--pattern may be applied for economy of worktime.Said anchor may be combined with semi-precision attachments as the mortice rest and crowns in bilateral free-end constructions.

The above and other objects,features and advantages of the pre--sent invention will be more fully understood from the follo--wing description considered in connection with the accompag--ning illustrative drawings:

Fig.1 illustrates a front elevational view of an upper arch with partly missing teeth presented in a stonemastermodel showing one form of the invention of removable upper partial restora--tion according title,composed of 2 posterior-saddles and one anterior saddle with denture-teeth said saddles combined with a
special tissue-born base resin or chrome removably  interconnected
by means of a retentionsystem between 4 living abutmentteeth,said
restoration is shown in place on the masterstonemodel of the pa-
-tient 's upper jaw.

Fig.2/a:illustrates separately a top view of the complete resin
onlay-structure(alternative for metal-rest) composed of a buc-
-cal(side to cheek) onlay and a lingual(side to tongue)onlay.

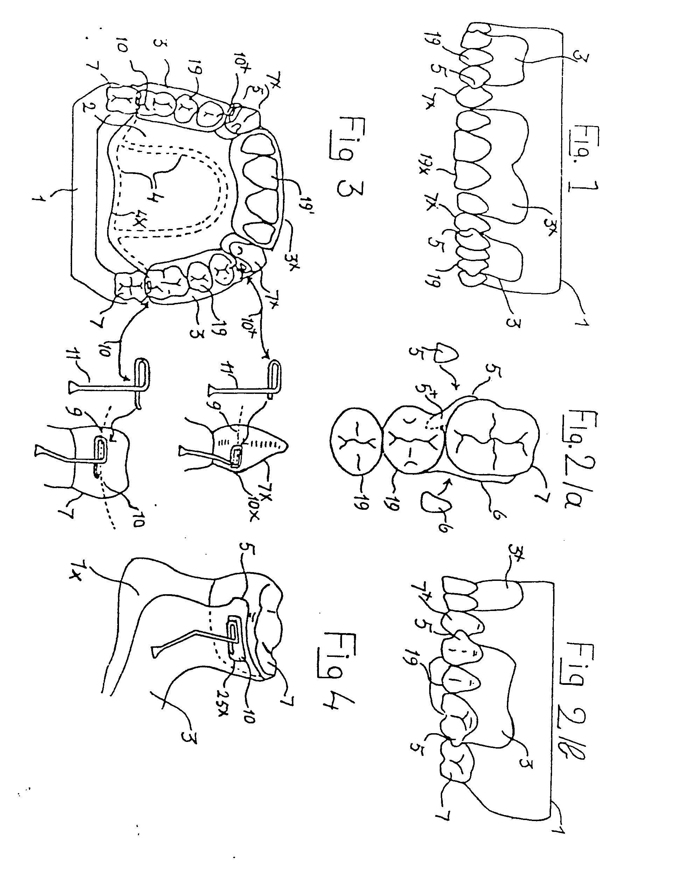

Fig.2/b:illustrates a side elevational view of Fig.1 thereof il-
-lustrating the position of the onlays devised as rest on the face
(buccal) of the posterior and anterior abutmentteeth.

Fig.3:illustrates an angled top perspective view of Fig.1 on a
masterstonemodel illustrating the retention-system devised on the
living abutmentteeth located (retention-system) in the path of in-
-sertion of the various saddles and separately a vertical sec-
-tional view of the retention-anchor designed for an anterior or
posterior abutmenttooth according an universal standardsize and
form adaptable to any toothsize.

Fig.4:is a perspective side view showing anchor-position in its
spaced recess and the anchor-shield  designed in the saddle-
-border to eliminate foodimpact.

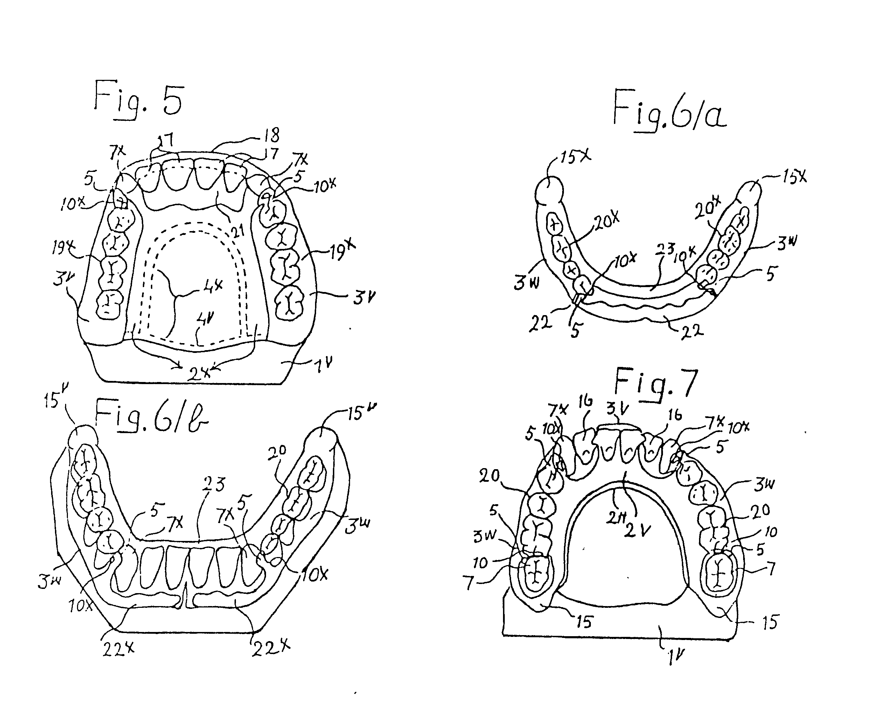

Fig.5:illustrates a top angled perspective view of an upper par-
-tial denture of title in form of a bilateral free-end restoration
(case missing all the posterior -teeth) composed of 2 posterior-
saddles with 8 denture-teeth and combined with a tissue -born resin or
chrome base devised with same elements as Fig.1 and provided with
an extra labial bar,fixed,hinge-locked or partable splitted bar;
said restoration is shown in place on the masterstonemodel of pa--tient 's upper jaw.

Fig.6/a top-plan view of a lower partial restoration according title in form of a bilateral free-end restoration(missing of all the posterior-teeth)composed of 2 posterior-saddles with 8 den- -ture-teeth combined with a special tissue-born base free from the gingiva-margin and provided with a complete or partly labial bar fixed or hinge-locked,or partable splitted bar.

Fig.6/b: illustrates Fig.6/a on the masterstonemodel according the same design but with a partable splitted bar instead of the hinge-lockbar or complete fixed.

Fig.7:illustrates an angled top perspective view of a lower par- -tial restoration of title on a masterstonemodel,illustrating the same retention-system as used in Fig.3 and devised on the living abutmentteeth,said retentionsystem is located in the path of inser- -tion of the various saddles

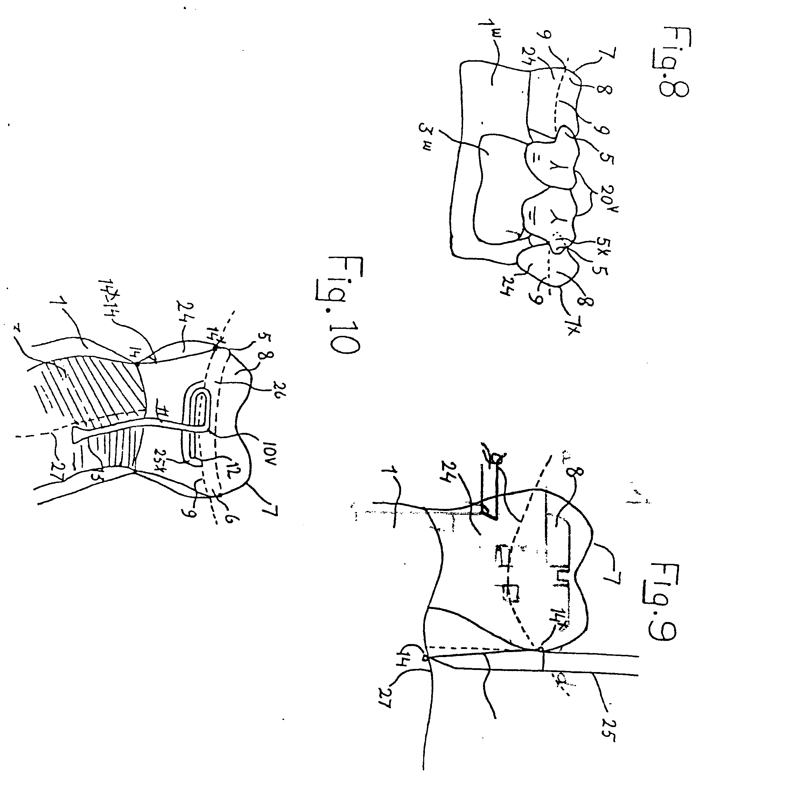

Fig.8:illustrates side elevational view of a single saddle with 2 denture-teeth placed on a partly model to show the correct po- -sition of the onlays(buccal) in the restzone of their surveyed abutmentteeth drawn with a carbon circumference-line 9 dividing said abutmentteeth in the middle of their buccal surface in a rest-zone and retention-zone(used as a mainrule for all restora- -tions)

Fig.9:illustrates vertical elevation of a surveyed posterior-abut- -menttooth buccal side with circumference-line 9 to show the deter- -mination of the proper path of insertion 14'-14. with 2°degrees angled course.

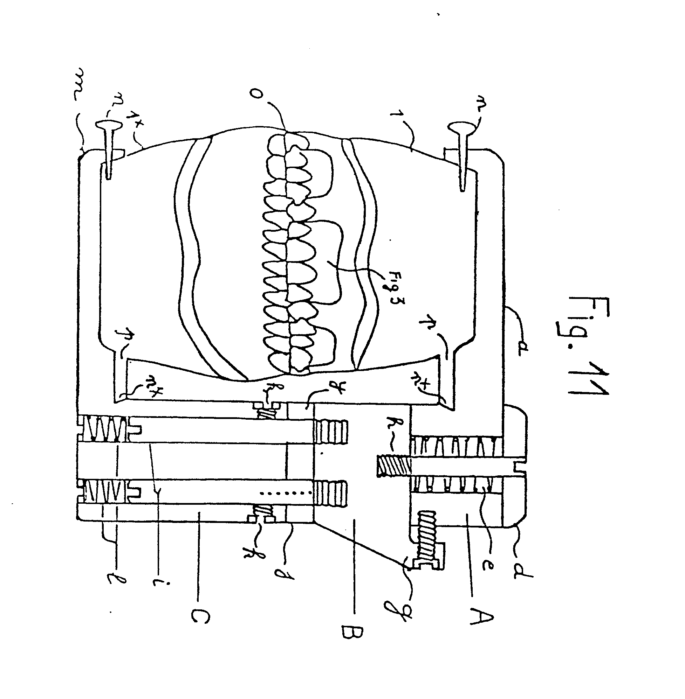

Fig.10:illustrates vertical elevation of side surface of a sur- -veyed  posterior-abutmenttooth for determination of the pro--per location of the retention-anchor in its recess, said anchor placed in the centre of said circumferenceline, half of the an- -chorhead in the rest.zone and the other half(retention-arm) in the retention-zone with 1mm-1,5mm lateral undercut depth.

b) illustrates the proper approximal limit-border of the sad- -dle -contact(drawn in dotted line) in relation with its abutment- -tooth said contactborder being above the retention-anchor is used as a shield processed in resin to cover the anchor against food- -impact.

Fig.11:Illustrates a proper designed and constructed mounting- -instrument used to set up the restoration of title according a proper non-interferring articulation .

***

Referring to the drawings, and more particularly to the figs. 3 and 2 there is shown the form and structure of the restoration according title varying according the case of missing teeth said restoration is processed in fracture-resistant resin in form of one single saddle.with denture-teeth broadly designated by the Fig.8 or in form of various saddles with denture-teeth combi- -ned in a special tissue-born resin or chrome base broadly de- -signated by Fig.3 which is designed and constructed with the following.elements:

(it will be appreciated that any one or more saddles may consti- -tute the embodiment of this invention illustrated in Figs.1-11.) Thus, the restoration of title designated in Figs. 1(front-view) and 3(top-view) shown on the masterstonemodel (1), a replica of patient's upper jaw, consists of a supporting denture-base (2), Fig.3 made of fracture-resistant resin, 1 .mm thick, or chrome alloy 0.45mm tissue born in the palate of the mouth said base 2 functions to unite and bear various saddles(3) in proper way of an even and to--lerable distribution of the masticatory and occlusal pressure. The basestop(4) in form of a parabolic rim including the postdam--ming(rear-border of denture-base (4X)) is processed in resin or chro--me as a half parabolic rim of 0.5mm-1mm depth and 3mm width si--tuated in the innersurface of the resin or chrome denture base, it functions as a substitute for the harmfull metalrests used in the conventional chrome or plastic partial restoration, said base--stop is only devised in the upper partial restorations combined with onlay-rests or without in case of weak abutmentteeth (rule).

Said base-stop(4) functions particularly to hold the total partial structure and its function in place eliminating the drift of the proper denture-seat and articulation(functional bite-contact) and eliminating the strain on the living abutmentteeth(7) or (7X).

The various saddles, one anterior 3X and two posteriors(3) united in the supporting base 2 are removably bridging the interocclu--sal space of missing teeth in the arch of the dentition to resto--re a harmless contact with the remaining teeth and to restore the proper bitefunction and aesthetic eliminating the drift and eruption of the healthy living teeth.

The articulation of the restoration in title is established on sound principles of a non-interferring function between the teeth upper and lower by means of a determined horizontal rotational sliding with flat abraded denture-teeth in harmony with a horizon--tal even equilibrated bite-pattern according the horizontal theo-- rie or by means of a free-rotational sliding in harmony with the existing natural abraded pattern properly sliding without ob-

- 10 -

-struction in order to eliminate eruption of the teeth caused by vertical and horizontal lever-effects.

As an alternative for the basestop used as a harmless rest-element, a complete onlay-structure illustrated in Fig.2/a/(5+6) composed of a buccal onlay(5) in form of an arrow and a lingual onlay(6) in a more extended form of an arrow is devised as a harmless support on the buccal and lingual toothsurface of strong selected living a--butmentteeth(7 &7x) Fig.2b.

As the natural tooth-structure tolerates a compressive loadforce to the extend of its natural limitborder but as a natural tooth is not made for pulling-load(proof in the application of cera--mic jacketcrown restoration, said restoration will rather break by a lateral force than by a compressive vertical load), based on this fact the onlay-structure of the invention is designed to trans--fer vertically the compressive load without any pulling what is not the case with the conventional clasp-structure combined with rest Each saddle(3) has in most cases 2 complete onlay-structures to be located on two living abutmentteeth(7/7x)(strong teeth selected and surveyed to locate the said onlays).

Said type of onlay-rest(5+6) is applied particularly in a single sad--dle Fig.8/3''' illustrated on the mastermodel 1' as a replica of patient 's lower jaw.

The said onlay-rests(5+6) are waxed in shape of an arrow on the sur--veyed abutmentteeth of model and processed in a rigid, clear or gum-or tooth-toned fracture-and wear-resistant resin into the den--ture-tooth 19/Fig 2/a of the saddle-base. The length of the onlay is 5 mm., its joint(5x) by rootform into the denture-tooth (19) is 3mm. and the point(5) is 1 mm.

To qualify the fracture-resistant resin used for the structure of the onlays and the whole restoration,denture-teeth included,in the quality to resist wear,foodplaque,bacterien,acid-formation(causing toothdecay)aswell the discolouring-agents as foodstains,nicotine, tartrestone etc.... a thick viscuous(12.000-30.000 centistokes) medical grade silicon oil is applied in the inner surface of onlays and restoration by means of practical designed dispenser ;said den--ture treatement is valuable for 24 hours and is daily to be re--newed by rinsing under hot tapwater and drying with a tissue; in order to deodorise and to keep the total restoration in a per--manent new look and perfect hygiene a thin film of medical gra--de silicon oil is applied  with a dispenser on the outersurfa--ce of the restoration;said treatment is valuable on used and new dentures,old dentures have to be cleaned first by a special la--boratory polishing-procedure patent applied in Australia No 1943/ 5/10/1977.

The design and form of said onlay-structure is located in the rest--zone(8)illustrated in Figs. 8 or 9 of the abutmenttooth(7)or(7X) marked by the circumference-line(9)dividing the whole toothform in a restzone and retentionzone(24).

The surveying procedure of the onlay-structure is detailed in the "complete construction plan" of restoration according title.

The function of said onlay-rest is to resist the side-pressure and sinking-motion of the saddle restoration caused by lateral and occlusal force.

The specified harmless supporting-system of above devised by means of the design of denture-base,(2) or (2V)or (2K) or (23) or (3W) provided with rest-onlays  or basestop is further combined with a precise

surveyed,resiliently,stressbroken retentionsystem composed of 2 minute retention-anchors (10) and (10X) illustrated in Fig.3, said an- -chors are processed in the proper surveyed path of insertion of each saddle full description is detailed in the "complete construc- -tion-plan" of restoration according title.

The design and structure of the minute retention-anchors (10) or (10X) (3 mm height) is illustrated according an increased scale separate- -ly at the side of Fig.3, in the design (10X) for anterior living abutmentteeth and (10) for posterior living abutmentteeth.

Its structure is preformed in one standardform and size (10) to be modified in (10'), its use is universal in any restoration of title in order to be adapted on any toothsize of the selected living abutmentteeth (7X) and (7) which are surveyed illustrated in Figs. 3 and 9 and 10, full description is detailed in "the complete construc- -tionplan" to follow. The anchor (10) is composed with a anchor-head (10V), Fig.10, a flexible stem (11), a resilient arm (12) and a anchor-tail (13) completely illustrated in Fig. 10.

The standardform (10) fig. 3 designed for use on the side-surface of the posterior-teeth (7) is reformed in a proper form (10X) Fig.3 for use on anterior teeth (7X) properly surveyed (see construction- -plan to follow).

The structure of the said anchor (10) is indestructable, formstable, and anatomical preformed to grasp the bell of the tooth, spring- -tension can be adjusted and is adaptable to any toothform and size, posterior or anterior; it is made of high-tensile chrome- -nickel wrought wire fracture-resistant in 0.45 mm Ø for weak teeth and 0.65 mm Ø for strong teeth.

In Fig. 3 a partial upper restoration according title is illustra- -ted in place on the masterstonemodel of the patient 's upper jaw.

The construction of said restoration as above is composed with 3 saddles: one anterior (3X) with four dentureteeth (19X) and two posteriors (3) with 6 denture-teeth (19); the two posterior-saddles (3) are fitted with two minute harmless anchors (10) in the proper path of insertion (14X - 14), Fig.9 of each saddle.

The proper contact and location of said anchors (10) and path of in- -sertion (14X-14) are realised by a time-saving surveying-procedure for direct processing of the restoration on the masterstonemodel (1) outlined in " the complete constructionplan " to follow.

Said retention-anchors have a flexibility of 0.5mm-1mm to sus- -pend the saddle-restoration in a strainfree contact between the natural retainer-teeth (7X-7; 7X-7) in Fig.3. Said anchors of above cooperate in harmony with the natural flexibility of the living teeth and rootstructure without to harm the enamel of the tooth- -structure by use of the silicon oil thick grade as mentioned neutralising any dammage of the metal contact, acid-formation, bacterien causing decay. In case of decay during normal circum- -stances of the further life-cycle a gold-inlay or composite-in- -lay is used as restoration and the anchor is refitted in the new situation; a metal-inlay (chrome bridgealloy) would be most desirable .

In Fig.7 a partial lower restoration based on the principles of title and composed of three saddles with 8 denture-teeth:one an- -terior (2 teeth (3V)) and two posteriors (6 teeth saddles (3 W)) said restoration is illustrated in place on the masterstonemo- -del (1V) being a replica of the patient 's lower jaw.

The two posterior-saddles (3W) are devised with two minute harm- -less retention-anchors 10 in the proper surveyed path of inser- -tion (14 - 14X) Fig. 9 of each saddle; the method of devising said

-14-

insertion and fitting of preformed anchors (10) are detailed later in the description of "the complete construction-plan" of the res--toration in title;said anchors (10) and (10X) have a. proper contact and location as said for the upper partial restoration in Fig.3. The anchors (10) and (10X) have the same design and structure as the one 's used in the above said restoration of Fig.3.

To support said lower restoration Fig.7 the same design of the complete onlay-structure (5+6) Fig.2/a is used as for the upper res--toration in Fig.3;said onlay-rests (5+6) are applied on the abut--ments (7X- 7).

In case of weak abutmentteeth (7) the retromolar pads (15) are used as substitute for the onlay-rests(their function is the like as a shock-absorber),in case of weak abutmentteeth (7X) the onlay-rests are devised on the other living teeth (16).

The base (2V) is made of fracture-resistant resin or chrome alloy designed as broadly and thinly,1 mm thick ,the loweredge (2#) is 2 mm with teardropform,said supporting base (2V) is without contact on the remaining living teeth.

Alternatively I provide an other form of the invention according title  specified as a bilateral upper or lower free-end restora--tion illustrated in Fig.5 and 6/a and b.Said form of structure is designated where all natural posterior teeth upper or lower are missing with the anteriorteeth 17 only remaining.

In reference with above,Fig.5 illustrates a bilateral upper par--tial free-end restoration according title in place on the master--stonemodel (1V) as a replica of patient 's upper jaw.The said re--storation Fig.5 is composed of a complete tissue-born base (2X) de--signed with a parabolic basestop (4X) in form of a rim including

0009507

the postdamming [(4 V) rim in the rear-border of denturebase);said ba-
-sestop including postdamming function as a substitute for metal-
-rests to support the whole restoration in the correct seat on the
jaw and to maintain the proper bite-relation(occlusion)elimina-
-ting the drift and sinking-motion of said restoration.Further
two posterior saddles (3 V) united in the said base (2X)are provided
with denture-teeth (19X), two rest-onlays (5+6) are joined with labial
bar,the fixed type (18)or the movable type with hinge-lock Fig. 6/a
(22)or the partable splitted bar/Fig.6 (22X).The design,function
and structure of the basestop(4X)and 'rest, onlay-structure(5+6)
is the same as used in the partial upper restoration of Fig.3;
the design of the base tissue-born in the palate is free from the
gingiva-margin of the front-teethzone 21.The function of said ba-
-se (2X)and basestop (4X+4 V) is to achieve an even distribution of
the occlusal(bite-contact)load and pressure eliminating the sir-
-kingmotion and drift of restoration and securing a permanent pro-
-per seat and articulation(bite-contact).

The function of the labial bar (18) in front of the jaw is to sta-
-bilise and retain the denture firmly in the front of the jaw wi-
-thout to harm the living teeth important for later modified
construction of complete restoration.The fixed type of bar joined
into the posterior-saddles (3V) is designed in case the jaw is free
from undercut to pass the restoration without obstruction du-
-ring the insertion,the movable bar hinge-locktype is designed in
case the jaw impede the insertion of the restoration caused by se-
-vere undercut of jaw,the partable splitted bar is designed for
small sized jaw obstructed by tissue;the proper choice of bar is
previously tested on the workmodel with coldcure resin.

-16-

To secure the hold backwards,2 minute stress-broken harmless an-
-chors [(10X) same as used in Fig.3) are devised in the path of in-
-sertion (14X-14),Fig.9,of both saddles (3V) of restoration illu-
-strated in Fig.5.The construction-procedure is detailed in the
"complete construction plan".

In Fig.6/a a bilateral lower partial free-end restoration acc.
title is illustrated without mastermodel,said restoration,Fig.
6/a is composed of a tissue-born base (23) free from the gingiva
margin of the front-living anterior-teeth.Two posterior saddles
(3W) with 8 posterior-dentureteeth (20X) are united in the tissue-
-born base (23) made of fracture-resistant resin or chrome-alloy.

To support the restoration and eliminating the drift or sinking-
-motion,the base (23) is extended in the retromolar pads,(15X),in the
front the base (23) resting on the jaw together with the labial bar
(22).stabilise the restoration in balance and in proper seat.

Two onlay-rests (5) are devised on two living abutmentteeth [canine
(7X)] to support the restoration in the middle in that way an even
distribution of pressure is spread over the complete restoration
and transferred to the jaw.

To secure the hold backwards two minute stressbroken anchors (10X)
are devised in the path of insertion (14X-14) Fig.9 of both saddles
(3W) of restoration.The construction procedure is detailed in the
"complete construction plan".The application of the differnt ty-
-pes of labial bars has been detailed in the description of Fig.5.

Fig.6/b illustrates Fig.6/a on the masterstonemodel according the
same design but with a partable splitted labial bar (22X) instead of
the hinge-lockbar or complete fixed bar.The said labial bar 22X
is designed in cases of low-sized jaws impeded by tissue.

In reference with the Figs.8,9,10 referring and specifying the meaning of the illustrations of said Figures in description on page 7 and 8 I will not repeat said description in detailed de--scription as the meaning of said description of Figs.8,9,10 have been sufficiently described in that stage of the description of the embodiment of the invention and as the Figures will be clearly detailed again in the description of the " complete con--struction-plan of the restoration according title.So please read description of page 7 and 8 related to the Figs. 8,9,10 in that stage of the detailed description.

One particularly note I like to mention related to resist the food-impact between the anchor-system and saddle-structure a shield (26) Fig.10 is designed and processed in resin over the anchors (10) or (10X) by means of a proper contact-border of the sad--dle related to its abutmentteeth (7) or (7X) to cover the retention--anchors against foodtrap.The thick-graded silicon(12.000-30.000 Cstokes) medical grade is applied on said anchors to seal the border perfectly against said foodtrap.

Fig.11. Illustrates a proper designed and constructed(of high strength in rustfree chrome base stainless steel surgical grade) dynamic dental mounting device in a handsome form of high preci--sion and resistance,mounted with the restoration of invention according title and Fig.3.Said device is used to set up the den--ture-teeth (19) in the restoration of invention or in general den--tal constructions(fixed partial and full denture construction) in order to achieve a harmless or proper natural bite-function that means a setting-up according a non-interferring stressbro--ken bite function(articulation) related to the sound articula--tion theories-1) in order to accomplish the setting-up of the dentureteeth in a harmonious bite-function with the natural bi--te function (articulation) and bite-contact in rest(occlusion in centric) of the abraded pattern of the remaining living-teeth in the arch of dentition to berestored.

or- 2) in order to accomplish the setting up of the denture-teeth related to the horizontal articulation-theorie ba--sed on a determined tecnic to equilibrate the bite-function on a horizontal bite-level without interference of all teeth(aswell natural aswell artificial of the restoration of title)

Fig.11. represents a vertical elevated cross-section of the said dental mounting-device and the restoration of title according Fig.3 in a front elevational view mounted with upper-(1) and lower-(1x) jawcasts related in centric bite-contact(centric occlusion; Said mounting-device is composed with two proper systems to im--mitate the human 's jaw function in a simplified and practical way.

1.The first system is a mobile :(or loose) adjustable rotable ho--rizontal gliding jointstructure (A+B)to reproduce the natural ma--stication motion of the lower jaw consisting of the bilateral si--de -foreward-, and backward gliding motion according a rotable determined horizontal or natural(according the natural abraded existing pattern)gliding motion.

The upperstructure,(A) representing a mobile,rotable,horizontal joint is a flat-planed cilynder with springactivator (e),said cy--linder is extended in a  mounting-jawcast-uppermember (a) which may be rotated freely with a horizontal or free inclined gliding motion around its joint screwpost d which fix or releases said cylinder with the flatplaned middle-structure (B) provided with a screwseat (h) to join the screwpost (d) aswell provided with a lock--device (g) to hold securely the structure [(A) rotable system] in centric bite (the main-natural position of lower jaw in relation to the upper jaw) or to hold securely the foreward-bite (incision-function) in order to perform a proper functional setting-up pro--cedure.

2.The second system is a mobile, rockfree and adjustable vertical-gliding jointstructure (B+C) with a translative motion (a vertical -parallel motion related to the jaw-cast members (a),(m)) in order to imitate and reproduce the motion of opening and closing of the lowerjaw.

The hinge-joint structure designed and devised in most mounting devices (articulators) functions with an oblique motion instead with a translative motion which is false and incorrect to immi--tate the natural motion of jaw in order to establish a harmless non-interferring (free from horizontal and vertical lever-effects) bite-function in the setting-up of the restoration according ti--tle and in the general dental construction(complete denture-con--struction and fixed partial construction) aswell the said hinge --joint-structure is incorrect in order to change the bite in a lo--wer or higher level in case of need or for adjusting the bite during the setting-up procedure for reason of waxshrinkage.

Said middle-structure (B) is provided with a twinpost [(i) calibrated with mm) to form a mobile, rockfree, telescopic unit with the lo--werstructure (C) extended with a lower jawcast-member [(m) holding the lower jaw-cast (1x)); said lowerstructure (C) is a springloaded twincylinder (𝓛) fitting rockfree the twinpost (i) which permits an exact vertical-parallel motion to its upperstructure (A) imitating the natural opening and closing bite-function.

Before mounting of the upper (1) and lower (1x) jawcasts, according the relation in patient 's skull, in their members a,m, the dental moun- -ting device is supported in a position to permit a free-way spa- -ce of 4mm space (j) between the upperstructure (A+B) and lowerstruc- -ture (C) by means of the space-insert (y)-flat piece fitting the space- -way (j)-and the build-in locksystem (k),(k).

The function of the space-insert (y) is:

1.The removal of the space-insert permits to lower properly the upper (a), jawcast into a correct lowerbite-level or in case of skrin- -kage of wax to adjust the bite-stand in a proper contact with the lower jawcast (1x) without to reset the denture-teeth particularly in the setting-up procedure of precision articulation systems (the free-centric articulation or flat abraded posterior-teeth).

2.To be used as a simplified mean of structure to secure the high precision and function of the total structure of the mounting- -device by maintaining solidly and permanently its vertical-pa- -rallel motion of its members and its centric hold during the dai- -ly use and lifetime.

3.To neutralise any wobble or misalignement of the relation of both members (a),(m).

Two built-in locks (k),(k) activated by releasing and closing by means of a key are devised in the lower structure (C) in order to permit to rise and to maintain the bite-stand (O) of the setting-up in a correct higher bite-stand and to permit up and down motion of (A+B) structures in case of need as in bite-corrections or prema- -ture spots or rised biteonlay-structures applied in fixed or re--movable partial construction.

The mounting of the bite-relation of upper (1) and lower (1x) may be re--alised in two ways as in a side-way according. Fig.11 for ease of view and access to control and adjust the correct bite-contact(0) of the setting-up or said bite-relation is positioned according the conventional way in front of the device.

The jawcasts are mounted with stoneplaster in a proper and secu--re way by means of anchor-pins(n) and anchor-seats(nλ) devised in the members (a) and (m). To release jawcasts without dammage to the to--tal structure the upper(A+B) and the lowerstructure (C) are separa--ted, the anchor-pins (n) are removed and the stoneplaster on the ledge of anchorseat splitted by saw-cut and dislodge with knife, said jawcast-relation may be replaced and dislodged plaster fi--xed with super-glue resin ciment on ledge of anchor-seat.

The Main-characteristics of above detailed description of the dental-mounting device are as follow:

1. Its capacity to imitate the human jaw-function in a practical--ly, simplified and proper way

2. Its universal use to accomplish in practise the various articu--lation-theories based on sound principles to restore a non-inter--ferring harmless bite-function in the restoration of title or in general dental-constructions

3. Its correct function to hold and adjust securely the correct centric bite-contact in rest(centric occlusion) of the upper and lower jawcasts during the setting-up procedure.

4. Its sturdy-compact and stabilised construction made of rust--free chrome-stainless steel surgical grade secures its func--tion for dayly use in the laboratory, its handsome form fits the hand.

The complete construction-plan of the restoration according ti-
-tle is classified in the procedure as follows acc. a chronolo-
-gic order of technical steps:

1. Lay out in design of a 3*** saddle-case upper partial according ti-
-tle illustrated on the masterstonemodel (1) replica of patient 's
jaw illustrated in Fig.3 by outlining a non-interferring peri-
-phery-border of the saddles involved being two posterior (3) and
one anteriorsaddle (3x) reduced by 1.5. mm in size aswell the out-
-line of the periphery-rearborder of the base 2 including the
preparation of the basestop (4) on the palate of stonemodel (1) said
preparation being a smooth groof of even depth 0.5mm-1mm, broad
3mm in a parabolic figure including a rim in the rear of den-
-turebase [(4x) in dental-term postdamming) prepared with same
measurement as base-stop (4).

2. Determination of four selected living abutmentteeth two anter-
-ior (7x /7x) and two posterior (7/7) on the mastermodel (1), two for
each posterior saddle-structure (3) in order to establish a com-
-plete horizontal circumference-surveying line (9) in the middle
of the whole toothform of all said abutment-teeth.

3.The said determination as above of the proper and same comple-
-te circunferenceline on all abutmentteeth is established by the
proper tilt of the surveying table with the mastermodel (1) in or-
-der to permit the circumferenceline-drawn by the carbonrod of a
proper dental surveyor-to be marked in the middle of the whole
toothform of all said abutmentteeth that means all toothsurfa-
-ces involved as the buccal side(side to cheek) or the labial
side(side to lip) or lingual side(side to tongue) or approximal (side-surface left or right).

From the tecnic step 3 the Mainrule is derived:That the above said tilt of the surveying table with the mastermodel (1) will be the sa--me as for the determination of the design of the onlay-structure aswell for the determination of the path of insertion of the re--storation Fig.3 and aswell for the determination of the proper location of the retention-anchors (10) or (10x).

The said carbon circumferenceline 9 Fig.9 describes a full circle--line on the spheric surfaces as the buccal,lingual,labial,appro--ximal,palatinal(the real mean being specified as above) of all the abutmentteeth(7 or 7x)involved,dividing the said spheric surfa--ces of the whole toothform of each abutmenttooth in a restzone(8) as illustrated in Fig.9 and in a retentionzone (24).

4. The determination of the design,structure,size and location of the complete onlaystructure used as substitute for the harmfull metalrests.

The complete onlayrest(5+6)illustrated in topview Fig.2/a,hori--zontal cross-section,is composed in a buccal onlay(5)and a lin--gual onlay(6)both designed in form of an arrow;the arrowpoint is 1 mm thick,length is 5mm,width of joint (5x)into denturetooth (19) is 4mm,root in denturetooth is 3mm(the onlay is never processed on the surface of the denturetooth but provided with a roothold). The complete onlay-structure(5+6) is designed in the restzone (8) illustrated in Fig.8 although the lingual (6) onlayrest may be de--signed in the rest and retentionzone (8)and (24) previously bloc--ked out with stoneplaster in the stage of blocking out of the path of insertion.

The denture-tooth (20v) used in combination with the onlay-struc--ture (5+6) is made of first quality hard and wear-resistant resin-
-material based on pyolytic silicium dioxide used in the type iso-
-sit toothstructure or as an alternative the first denture-tooth
used in combination with the onlay-rests may be a ceramic materi-
-al in form of a canine processed with fracture-resistant resin
in the saddle-structure (3W)Fig.8,the other denture-teeth not in-
-volved with the onlay-structure may be ceramic or hard and wear-
-resistant resin.

The onlay-rest structure (5 +6) Fig.2/a are waxed a little over-
-sized in an arrowshape on the abutmentteeth(7) of mastermodel (1W/
Fig.8;in case of use of the ceramic canine denture-tooth in combi-
- nation with the onlay-structure as said above said onlay-struc-
-ture will be processed in fracture-resistant resin clear or gum-
-toned,in case of the use of a hard wear-resistant resin tooth
as isosit denture-tooth said onlay-structure will be processed
with isosit crown-material based on pyolytic silicium dioxide
resin base(5 times harder than normal resin) in toothshade accor-
-ding abutmenttooth. Said onlay-structure aswell the complete res-
-toration of title is coated with medical graded silicon oil to
resist wear,discolouring ,bacterien and foodsmell during the use
of restoration by the wearer.Said onlay-structure may be relined
in case of need.

5. The surveying and determination of the proper path of insertion
of the denture-saddles 3 between the abutmentteeth.

Important:Considering the Mainrule as said above(read again page 22,23)
secure the tilt-position by locking firmly and carefully the sur-
-veyingtable with workmodel in place according the position-tilt
used for the determination of circumferenceline(technical step 3).
The final path of insertion,(14X-14)Fig.9 is determined by means of a proper dental surveyor and tapered surveyingrod (25) with 2°
degrees angle-course as illustrated in Fig.9 by positioning said
rod(25) against the abutmenttooth(7) and the crest of the ridge(27)
two contacts are made as the contact [(14X) at level of circumference-
-line 9) and the contact [(14) at level of the crest-line], both con-
-tacts are marked by scratch.The distance between the two said con-
-tacts is the course in slope of 2° of the final path of insertion
specified by numeral (14X-14).Said path(14X-14) forms an undercut area
which is blocked out between the two marks with stoneplaster in
thick consistency as a putty(wetting of the abutmenttooth is ne-
-cessary for hold of filling).Said putty-like stoneplaster is model-
-led with the edge of the tapered rod 25 during the setting-stage
in the shape of a smooth round-sloping path between the marked scrat-
-ches (14X-14).Said tecnic of path of insertion is applied on all
abutmentteeth (7' 7' 7 7) Fig.3 according the tilt of the circumfe-
-rence-line marked in the middle of said abutmentteeth.

6.The determination of the proper location of the retention-an-
-chors (10) or (10X) in the denture-saddles (3) and on the abutmentteeth
(7) surveyed with the circumference-line (9).

Considering the Mainrule as said and considering that the said
circumference line (9) marked on the total surface of the abutment-
-teeth (7) divide the side-surface of the said abutmentteeth (7) Fig.
10 in a restzone (8) and in a retentionzone (24) a small amount of the
undercut-material(stoneplaster) in the retentionzone (24) is reces-
-sed with a scalpel-blade to provide a recess (25X) Fig.10 ± half
the size of anchor (10) in the centre of the circumferenceline (9) for
correct positioning of the retention-anchor (10) or (10X) incase of
anterior and to provide proper retention for anchorarm (12) as be--ing 1 mm-2mm under the circumference-line,said recess has 2mm height and 9 mm length,1 - 2mm horizontal depth(lateral undercut--depth) which fits the size of anchorarm.(12).

Fitting and positioning of the straight stem (11) on the path of in--sertion (14X-14) at 2mm from the crest-line(27) of ridge from where said stem is bent in a right angle on 2mm distance from crest to form the tail-anchor (13) used for retention in the saddle-base (3).

Said retention-anchor (10) according the above detailed plan and tecnic placed in correct position of the recess (25) is further fi--xed to the mastermodel (1) by means of sticky wax on the anchortail and ridge of masterstonemodel (1) while the anchor-head (10V) is glued with a drop of super glue resin ciment,said anchor-head (10V) is half the size beyond the circumference line (9) and the other half, the anchorarm (12) being 1-2mm under the circumferenceline,that means 1 mm stressless spring-tension of the contact.The superglue is on--ly applied on anchorhead (10)  and recess (25X not spilled over an--chor nor over recess).

A fine smooth layer(thickness of 0.5mm) of stoneplaster is coated only on anchorhead-not the area between the 2 dotted lines (26) re--served for the design of anchor-shield (26) -,aswell the stem (11) is coated -not the anchor-tail (13);in order to have a proper bond to the mature dry stone-model (1) always wet or soak model for two minutes.The sticky wax of tail-anchor (13) is boiled free after har--dening of the plasterstone layer.The above procedure of surveying and preparing  the position of the anchor (10) or (10X) eliminates the time absorbing duplicating-procedure.

7.The determination of the anchor-shield (26) in form of the sad--dle approximal border-contact) to protect anchor against foodimpact in the path of insertion(14x-14).The dotted line-zone(26) drawn beyond anchorhead(10) illustrates the extension of the saddlebor--der with a passive contact in the restzone(8) used as a shield to protect anchor against foodimpact.The size of the border is con--trolled in occlusion(closed bitestand) during the waxstage to a--void impeding with the bite in function.

the case is ready now to proceed the setting up of the denture--teeth considering the special care of the denture-teeth involved with the onlayrest-structure.A proper instrument is used for the setting up to control the occlusion in proper centric hold and to control the bite in lateral shift left and right to avoid inter--ferringcontacts between the teeth.

The dynamic mounting-device as illustrated in Fig.11 is to prefer--red to any other type of articulator.

While I have s-hown and described the preferred embodiment of my invention,it will be understood that the invention may be embo--died otherwise than as herin specially illustrated or described and certain changes in the form and arrangements of parts and in the specific manner of practicing the invention may be made wi--thout departing from the underlying idea or principles of this invention within the scope of the appended claims.

I claim: 1.A removable tissue-born partial denture construction with a harmless cosmetic and secure retention-and restsystem and with a harmless(non-interferring) bite-function said restoration realised in the variuos forms according the situation of the mis--sing teeth in order to restore the complete situation of these said missing →

teeth in the natural dentition,according a proper hygienic and fracture-resistant structure being processed according a producti- -ve,precise-surveyed method of construction.

2.A removable tissue-born partial denture construction as set forth in claim 1,wherein a precise surveyed stressbroken,harmless(no traumatic damage on rootstructure nor on toothenamel),inconspicu- -ous,secure and permanent-retentive aswell adjustable retentionsy- -stem is devised into the path of insertion of each saddle of the various forms of restoration of title,said retention-system is con- -sisting of 2 minute resilient preformed anchors which are faste- -ned into the path of insertion of each saddle of restoration to fit and grasp(not pin-pointing) without pressure .. ........ and pull the spheric bell of the side-surface (approximal) of the a- -butmentteeth by means of selective and analytical surveying me- -thod according Fig. 10 and construction-plan consisting of a lo- -gic order of tecnic-steps in order to realise the retentive capa- -city in a hidden aesthetical and comfortable mode without food- -trap,said minute resilient anchor (3 mm.height) is preformed in a universal standard-form and size in order to fit any toothform and size(posterior aswell anterior) and meanwhile to be fastened into any of the various forms of restoration to restore the comple- -te situation of partly missing teeth,the structure of the reten- -tion-anchor is fracture-resistant made of high tensile wrought chrome-nickel wire, 0.5-0.65 mm/⌀,its spring-tension being adjus- -table and its structureform is designed with an anchor-head and flexible arm joined to a flexible stem provided with an anchor- -tail.

3.A removable tissue-born partial denture construction as set forth in claims 1 and 2 wherein a precise-surveyed harmless and cosme--tic restsystem is devised comprising different elements as:

An onlay-structure composed of a buccal or labial(side to cheek) onlay and of a lingual(side to tongue or palate) used as an alter--native for the harmfull metalrests,and in design to resist harm--less the compressive ōcclusal load on proper surveyed healthy li--ving abutmentteeth,said onlay-structure,processed in each saddle of the most variuos forms of restorations according title,is ma--de of fracture-and wear-resistant rigid resin toned in clear, gum,or tooth-shade on the buccal or labial and lingual surface of two   selected abutmentteeth for each saddle of the restoration of title,said onlay-structure(two for each saddle ) is located in the rest-zone of the spheric bell of the toothform of each abutment--tooth,said retszone is determined by a surveying-circumference -line selected in the middle of the toothform of said abutment--teeth divided in a restzone and in a retentionzone;an alternative for the onlaystructure is provided as a basestop in form of a pa--rabolic rim processed in the inner-surface of the denture-base only in upper partial restoration of title in case the abutment--teeth are weak for the function of support.

4.A removable tissue-born partial denture construction as set forth in claims 1,2,3 of which the construction-form may  be a single saddle provided with dentureteeth or various saddles united in o--ne unit with a proper-commun insertion by means of a fracture-re--sistant resin or chrome-alloyed base in special design related to the various forms of restorations according illustrations (3, 5,6,a and b,7,8),said chrome-base may be processed according the withdraw-tecnic of special resin-waxtexturised patterns on the masterstone-model for productivity.

5. A removable tissue-born partial denture construction as set forth in claims,1,2,3,4 of which the construction-form may be pro--vided with the elements of preceding claims and with an extra labial bar,fixed,mobile or partable selected according the jaw--form and applied in the case of the bilateral free-end upper and lower restoration-form according title(Figs. 5 and 6,a and b).

6.A removable tissue-born partial denture construction as set forth in claims,1,2,3,4,5 in which the rest- and retentionsys--tem is devised according a special surveying -procedure as:

1)for the determination of the proper and commun circumference--line(horizontal circle-line Fig.9) selected in the middle of the toothform of each abutmenttooth involved in the various forms of restoration according title,said circumference-line dividing the said abutmentteeth in a rest and retentionzone aswell:

2)for the determination of the proper location of the design of the onlay-structure in the restzone aswell :

3)for the determination of the proper and commun path of inser--tion,Fig. 9 with 2°angle-course in every saddle of total resto--ration aswell:

4)for the determination of the proper location of the retention--system comprising 2 minute anchors for each saddle of restorati--on aswell:

5)for the determination of the proper design and location of the anchor-shield to resist the food-impact between anchors and sad--dle aswell:

6)to permit a direct manner of processing the restoration of ti--tle on the master-stonemodel which may be conserved.

7.A removable tissue-born partial construction as set forth in claims 1,2,3,4,5,6 in which all the various forms of restoration according title are maintained by a proper hygienic treatment based on a self-cleaning protection by means of a medical graded protective silicon oilfilm(5o-350 centistokes) daily applied,ac--cording the right directions of use by a pocket-sized dispenser, on the outersurface of new restorations according title or nor--mal denture-constructions aswell a silicon-oil liniment(thick--graded type of 12.500-30.000 centistokes) applied in the inner --surface of the restoration thereby enhancing  the resistance of food-impact and plaque,aswell to qualify the resin-onlaystructu--re as wear-and bacterien-resistant,aswell to qualify the reten--tion-anchors as harmless for the enamel of the toothstructure of the abutmentteeth aswell to enhance the resistance  to discolou--ring-agents,by means of the silicon-oil film thin grade,caused by foodstains,nicotine,tartre-stone,coffee,tea,curry etc...,as--well to neutralise the acid-formation causing toothdecay in the natural dentition;said silicon-treatment may be applied on nor--mal new high-polished conventional denture-constructions but on used  dental-constructions(included restoration of title) a spe--cial  laboratory-polishing procedure is necessary to make the silicon-treatement valuable and is part of the claim(patent ap--plied at 5/10/77 ; No 1943/Australia).

8. A removable tissue-born partial denture construction in which a harmless(non-interferring  gliding) bite-function in the resto--ration of title is accomplished based on sound principles of articulation-theories determined according a horizontal rotable gliding-function or based on a non-interferring gliding of the ex- -isting natural abraded unobtrusive toothpattern by means of a pro- -per designed and constructed dynamic dental mounting-device com- -posed of a mobile and adjustable jointstructure,rotable on a strict determined horizontal plane or rotable on an inclined pla- -ne according the natural abraded toothpattern or rotable accor- -ding the intra-oral tracing-record of the jaw-jointstructure(con- -dyle),said horizontal joint-structure is combined with a mobi- -le and adjustable rockfree vertical gliding joint-structure with a vertical-parallel motion of its members,both said systems are designed to imitate the human jawfunction according a practical and simplified manner aswell to hold securely or to change pro- -perly the proper centric bite-relation of the restoration ac- -cording a proper manner aswell to mount the bite-relation of re- -storation of title properly according the relation in the skull aswell to rehabilitate and survey the relation of disturbed na- -tural or artificial toothsets before the construction of fixed or removable partial construction.

9.A removable tissue-born partial denture construction as herein- -before described with reference to the accompanying drawings.

0009507

1/4

Fig. 1

Fig. 2/a

Fig 2/b

Fig 3

Fig 4

Fig.5

Fig.6/b

Fig.6/a

Fig.7

Fig.8

Fig.9

Fig.10

Fig. 11

| Category | DOCUMENTS CONSIDERED TO BE RELEVANT | Relevant to claim | CLASSIFICATION OF THE APPLICATION (Int. Cl.²) |
|---|---|---|---|
| | Citation of document with indication, where appropriate, of relevant passages | | A 61 C 13/22 11/00 |
| | FR - A - 1 252 137 (AMANIEU)<br>* Page 1, column 1, lines 37,38; column 2, lines 1-7; figures *<br>-- | 1,2,4, 9 | |
| | US - A - 3 076 264 (GOODMAN)<br>* Column 4, lines 47-75; column 5, lines 1-18; figures *<br>-- | 1,2,3, 4,9 | |
| | US - A - 3 309 771 (FLOREN)<br>* Column 2, lines 12-64; column 3, lines 1-45; figures *<br>-- | 1,2,3, 4,5,9 | TECHNICAL FIELDS SEARCHED (Int.Cl.²)<br><br>A 61 C |
| | FR - A - 2 174 326 (LAPEYRE)<br>* Column 1; figures *<br>-- | 1,2,9 | |
| | FR - A - 510 023 (ENGBERG)<br>* Summary; figures *<br>-- | 1,3,4, 5,9 | |
| | US - A - 3 593 420 (RITTER)<br>* Column 2, lines 10-59; figures *<br>-- | 1,2,3, 4,5,9 | CATEGORY OF CITED DOCUMENTS<br><br>X: particularly relevant<br>A: technological background<br>O: non-written disclosure<br>P: intermediate document |
| | US - A - 3 023 500 (PROSEN)<br>* Column 2, lines 21-72; column 3, column 4, lines 1-40; figures *<br>-- | 1-5,9 | T: theory or principle underlying the invention<br>E: conflicting application<br>D: document cited in the application<br>L: citation for other reasons |
| | US - A - 1 953 715 (JOFFE)<br>* Claims; figures * ./. | 1-4,9 | &: member of the same patent family, corresponding document |

The present search report has been drawn up for all claims

| Place of search | Date of completion of the search | Examiner |
|---|---|---|
| The Hague | 01-08-1979 | VANRUNXT |

EPO Form 1503.1  06.78

European Patent
Office

**EUROPEAN SEARCH REPORT**

| Category | Citation of document with indication, where appropriate, of relevant passages | Relevant to claim |
|---|---|---|
| **DOCUMENTS CONSIDERED TO BE RELEVANT** | | |
| | <u>US - A - 2 797 456</u> (ZAHN)<br>* Claims; figures *<br><br>-- | 1-5,9 |
| | <u>US - A - 2 674 040</u> (LENZER)<br>* Claims; figures *<br><br>-- | 1-5,9 |
| | <u>US - A - 3 999 297</u> (GLOBE)<br>* Claims; figures *<br><br>-- | 1,3-5, 9 |
| | <u>DE - B - 1 067 977</u> (WINKELSTROE-TER)<br>* Claims; figure *<br><br>-- | 1,3-5, 9 |
| | <u>CH - A - 445 015</u> (SOROKINE)<br>* Column 2, lines 9-37;<br>column 3, lines 1-28; figures *<br><br>-- | 1,3,4, 9 |
| | <u>DE - C - 944 215</u> (FREY)<br>* Claim; figures *<br><br>-- | 1-5,9 |
| | <u>FR - A - 1 378 385</u> (HOANESSIAN)<br>* Summary; figures *<br><br>-- | 1-5,9 |
| | <u>US - A - 2 770 880</u> (SHERROD)<br>* Claims; figures *<br><br>--        ./. | 1,4,9 |

**CLASSIFICATION OF THE APPLICATION (Int. Cl. 3)**

**TECHNICAL FIELDS SEARCHED (Int. Cl. 3)**

EPO Form 1503.2 06.78

**European Patent Office**

**EUROPEAN SEARCH REPORT**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | GB - A - 1 206 348 (BIOS) <br> * Claims; figures * <br><br> ---- | 6 | |
| | | | **TECHNICAL FIELDS SEARCHED (Int. Cl. 3)** |

European Patent
Office

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has-been drawn up for the first ten claims.

## ☒ LACK OF UNITY OF INVENTION

The Search Division considers that the present European patent application does not comply with the requirement of unity of invention and relates to several inventions or groups of inventions,
namely:

```
1. claims 1-7,9: Removable partial-denture
2. claim 8 : Articulator
```

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☒ None of the further search fees has been paid within the fixed time limit. The present European search report has been drawn up for those parts of the European patent application which relate to the invention first mentioned in the claims

namely claims    1-7,9: